Europäisches Patentamt

European Patent Office.

Office européen des brevets

(19)

(11) Publication number: **0 005 138**
**B1**

(12) **EUROPEAN PATENT SPECIFICATION**

(45) Date of publication of patent specification: 07.04.82

(21) Application number: 78300796.6

(22) Date of filing: 12.12.78

(51) Int. Cl.³: **C 01 B 3/36, C 01 B 3/52, B 01 D 3/06**

(54) Process for producing synthesis gas with wash water purification and novel flash column for use in said process.

(30) Priority: 28.04.78 US 900951
28.04.78 US 900952
27.10.78 US 955544
27.10.78 US 955545

(43) Date of publication of application:
14.11.79 Bulletin 79/23

(45) Publication of the grant of the patent:
07.04.82 Bulletin 82/14

(84) Designated Contracting States:
DE FR GB NL SE

(56) References cited:
US - A - 3 434 701
US - A - 3 881 994
US - A - 3 980 590

(73) Proprietor: TEXACO DEVELOPMENT
CORPORATION
135 East 42nd Street
New York New York 10017 (US)

(72) Inventor: Marion, Charles Parker
947 Shore Acres Drive
Mamaroneck New York 10543 (US)
Inventor: Estabrook, Lawrence E.
30-58th Pl. Long Beach
California 90803 (US)
Inventor: Richter, George Neal
1470 Granada Avenue
San Marino California 91108 (US)

(74) Representative: Brock, Peter William et al,
Michael Burnside & Partners 2 Serjeants' Inn Fleet
Street
London EC4Y 1HL (GB)

Courier Press, Leamington Spa, England.

Process for producing synthesis gas with wash water purification and novel flash column for use in said process

This invention relates to a process for the partial oxidation of carbonaceous fuels involving a gas cleaning process carried out in an apparatus including a novel flash column for water reclamation. More specifically, this process involves cooling and scrubbing the raw gas stream from a partial oxidation gas generator with reclaimed water and recovering, purifying and recycling the water.

Synthesis gas mixtures comprising hydrogen and carbon monoxide, and containing entrained particulate carbon, may be prepared by the partial oxidation of a fossil fuel with a free-oxygen containing gas, optionally in the presence of a temperature moderator. The hot effluent gas stream from the gas generator may be cooled by direct immersion in water in a quench drum such as described in U.S. Patents No. 2,896,927, 3,929,429 and 3,980,590. A portion of the entrained solids will be removed by the quench water. Following the direct quench cooling, the gas is scrubbed with water to remove further particulates. Alternatively, the hot effluent gas stream may be cooled in a gas cooler, such as shown in U.S. Patent No. 3,920,717 and then scrubbed with water. The quench-water or the scrubbing water may then be processed in the manner described in U.S. Patents No. 2,992,906; 3,097,081 and 4,014,786.

U.S. Patent No. 3,980,590 involves separating carbon from the quench water by extraction with an organic liquid, from which the carbon is subsequently separated by traditional distillation of the organic liquid.

The object of the present invention is to provide an improved method for processing the quench-water or scrubbing water obtained in a process for producing synthesis gas.

This invention provides a process for producing gaseous mixtures comprising $H_2$ and CO, by the partial oxidation of a hydrocarbonaceous fuel with a free-oxygen containing gas in a non-catalytic gas generator (15) at a temperature of 705 to 1650°C and a pressure in the range of 98 to 24520 KPa, cooling the resulting gas stream and contacting the gas stream with water, thereby removing solids and producing a clean gas stream and a carbon-water dispersion containing any ash, mixing a liquid organic extractant with said carbon-water dispersion, and separating by gravity in a decanter (61) a liquid extractant-particulate carbon dispersion containing gaseous impurities and a dilute water stream containing carbon, ash and gaseous impurities characterized by (a) introducing said dilute water stream from decanter (61) at reduced pressure into a vertical flash column (149) having a vertical weir (157) extending upwards from the bottom thereof and separating the lower portion of said column into a first chamber (158) and a second chamber (156), at least one horizontal stripping plate (148) within said column above said weir, the plate or each plate having a dispersing means (150, 151) for dispersing steam through water held on said plate, overflow and downflow means (153, 154) for discharging water from said plate or from plate to plate and then into said second chamber, below the level of water in said second chamber, first inlet means leading into the space below the bottom stripping plate and above said weir, second inlet means leading into the space above at least one stripping plate, first outlet means leading from said first chamber, second outlet means leading from said second chamber, and third outlet means leading from the upper part of said column, said dilute water stream being introduced through said first inlet, thereby vaporizing a portion of said water stream, and passing the vapors up through said dispersive means in each stripping plate and through the water contained on each plate whereby stripping gases from the water on each plate, and introducing the unvaporized portion of said water stream into said first bottoms chamber; (b) removing from said flash column through said third outlet, a stream of vapors comprising $H_2O$, hydrocarbons and at least one of the group $H_2S$, $NH_3$, and $CO_2$; (c) cooling said vapor stream, condensing and separating liquid water and liquid hydrocarbon from the uncondensed gases, and introducing at least a portion of said water through said second inlet on to a stripping plate in said flash column; (d) removing waste water containing solids from said first bottoms chamber through said first outlet, and discharging it from the system; and (e) removing reclaimed water from said second bottoms chamber through said second outlet, and recycling at least a portion thereof to said gas cleaning operation.

This invention also provides a flash column characterized in that it comprises an upright column (149) having a vertical weir (157) extending upwards from the bottom thereof and separating the lower portion of said column into a first chamber (158) and a second chamber (156), at least one horizontal stripping plate (148) within said column above said weir, the plate or each plate having dispersing means (150, 151) for dispersing steam through water held on said plate, overflow and downflow means (153, 154) for discharging water from said plate or from plate to plate and then into said second chamber, below the level of water in said second chamber, first inlet means for flashing at least one stream of water containing particulate solids into the space below the bottom stripping plate and above said weir, second inlet means for injecting at least one substantially solids-free stream of water into the space above at least one stripping plate, first outlet means for removing water from said first chamber, second outlet means for removing water from said second chamber, and third outlet means for removing vapors, overhead from said column.

Particulate solids, e.g. carbon soot and ash, entrained in the hot raw gas stream from a partial oxidation gas generator are removed by quench cooling the hot gas stream directly in reclaimed water in a quench drum, or by scrubbing with reclaimed water in a gas scrubbing zone after indirect heat exchange in a gas cooler, or both. By this means, a clean gas stream and a dispersion of particulate solids, are produced. Depending on composition, the clean gas stream is intended for use as synthesis gas, reducing gas, or fuel gas.

It is economically advantageous to reclaim the water from the aforesaid dispersion by removing particulate solids and gaseous impurities. The reclaimed water may be then recycled to the gas quench cooling and scrubbing zones. In the subject process, the dispersion of solids and water is mixed with a liquid extractant. A dispersion comprising particulate carbon, extractant, and a small amount of water is formed, and is separated in a decanter from a dilute water layer, which settles to the bottom of the decanter and comprises water, dissolved gases, waste hydrocarbons, ash, and a very small amount of carbon. In a preferred embodiment, heavy liquid hydrocarbon is mixed with the dispersion of carbon, extractant, and water from the decanter. In a distillation and separation operation, the extractant and water are vaporized, condensed and separated by gravity in a separation vessel. At least a portion of the solids-free condensed water is withdrawn from the separation vessel and is introduced on to a stripping plate of the flash column. At least a portion of the extractant from the separation vessel is recycled to the decanter. Any uncondensed gases (e.g. $H_2S$, $NH_3$, $CO_2$; and waste hydrocarbons) may be removed from the top of the separation vessel. Overhead vapors from the flash column are cooled to condense out water, and are introduced into a separate separation vessel, or optionally into the separation vessel associated with the distillation and separation operation. In one embodiment, an emulsion is also separated in the separation vessel associated with the distillation and separation operation, and is disposed of either (1) in admixture with the feed to the decanting operation; (2) in admixture with the bottoms water from the decanting zone; or (3) by heating and breaking up the emulsion.

The stream of dilute water is removed from the bottom of the decanter and is introduced into the flash column below a stripping plate. A portion of this water is flashed into steam, which passes up through the column. The remainder passes down through the column and drops into the receiving side chamber, (i.e. the first chamber). If desired a small stream of blowdown water from a gas cooler in the system e.g. located after the gas generator may be similarly introduced into the flash column. A portion of this water is flashed into steam and the remainder drops either into the return water side (i.e. second chamber) or into the receiving side chamber (first chamber) at the bottom of the flash column. The flashing steam passes up through gas dispersers i.e. holes or bubble-caps in the stripping plate or plates and strips the vaporizable impurities from the water contained on the stripping plate.

The bottom of the flash column is partitioned by means of a vertical weir into the two chambers. Solids in the water in the receiving side chamber settle to the bottom. The water in the receiving side chamber overflows the weir and falls into the chamber on the return-water side. Steam stripped overflow water from the stripping plate or plates flows through a downcomer system that discharges stripped water from plate to plate and finally exits below the water level in said return water side chamber. A small amount of waste water containing solid sediment is removed at the bottom of the receiving side chamber and is discharged from the system. If desired, the waste water may be sent to a water treating plant. Substantially solids-free reclaimed water is pumped out of the return water side chamber and recycled to the gas quench cooling tank, or to the scrubbing zones, or to both places. Optionally, a portion of this water may be recycled to the gas generator as a portion of the temperature moderator.

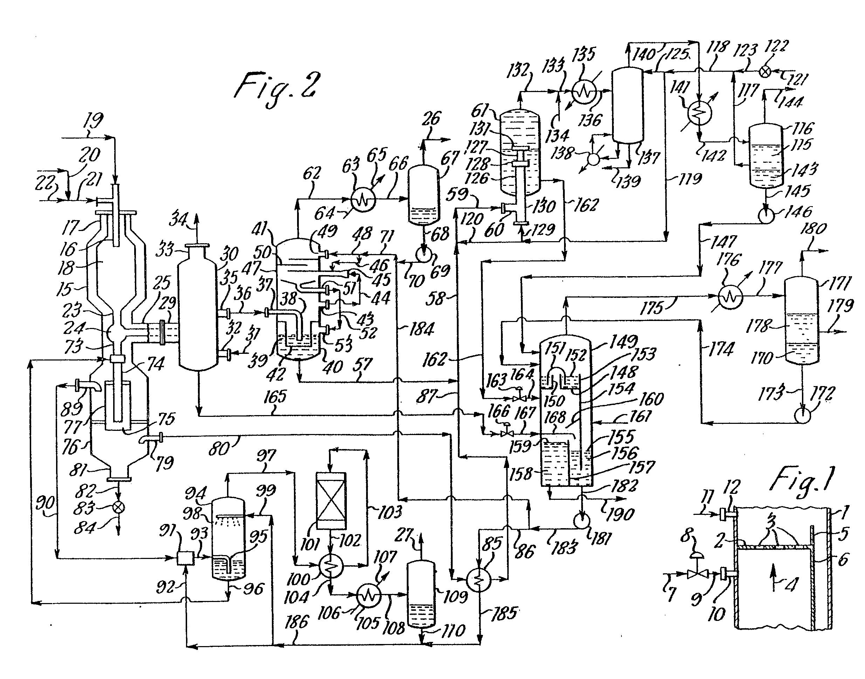

The invention will be further understood by reference to the accompanying Drawing. Fig. 1 of the drawing is a schematic representation of a crossflow sieve type stripping plate showing the direction of flow for liquid and vapor streams. Fig. 2 of the Drawing is a schematic representation of a preferred embodiment of the process.

Referring now to the accompanying Drawing, Fig. 1 is a fragmental schematic representation of a portion of a vertical cylindrically shaped flash-tower 1 including a stripping plate 2. Small diameter holes 3 are drilled in plate 2 and the rate of flow of vapours 4 upwards through the holes in plate 2 prevents the water on plate 2 from passing down through the holes. By this means vaporizable impurities may be stripped from the water held on plate 2. Horizontal plate 2 is substantially round, except that at one side there is a vertical chordal weir 5 that discharges into segmental or round downcomer 6. A solids-containing water stream in line 7 is passed through pressure reducing valve 8 line 9 and inlet 10, and is flashed into flash column 1. Substantially solids-free impure water is passed through line 11 and inlet 12 on to plate 2. Stripped water overflows weir 5 and flows down through downcomer 6 to a return-water side chamber (not shown in Fig. 1).

With reference to the Fig. 2, an unpacked, free-flow noncatalytic refractory-lined synthesis gas generator 15, has an annulus-type burner 16 mounted axially in its upper inlet port 17. The reaction zone 18 of the gas generator is fed with a free oxygen containing gas stream through line 19, and streams of steam in line 20 and hydrocarbonaceous fuel in line 22 are fed into the reaction zone through line 21.

The effluent stream of raw synthesis gas leaves the reaction zone through exit passage 23 and passes directly into an insulated chamber 24, where it is split into two. One split stream passes through insulated transfer line 25 into the first train of process steps, which ends with the production of a stream of unshifted product gas in line 26. The second split stream is processed in the second train, which terminates with the production of a stream of shifted product gas in line 27. The molar ratio $H_2/CO$ of the shifted gas stream 27 is greater than that of unshifted gas stream 26.

The first split stream of raw gas in transfer line 25, is passed through inlet 29 of gas cooler 30, where it is cooled by indirect heat exchange with a stream of boiler feed water from line 31, which passes through inlet 32 and leaves as steam through outlet 33 and line 34. The cooled gas stream leaves through outlet 35, line 36, inlet 37 and dip tube 38 and is contacted with water 39 in the bottom section 40 of gas scrubber 41. The process gas stream passes up through the water in the annular passage made by the inner surface of concentric pipe 42 and the outer surface of dip tube 38 and leaves by outlet 43 and line 44. The process gas stream then passes through venturi scrubber 45, where it is washed with water from line 46. It is then passed up through upper chamber 47 of gas scrubber 41. Water from line 48 and inlet 49 enters upper chamber 47 and cascades down over a series of trays 50 in reverse flow and in contact with the process gas stream, which is simultaneously passing up through the chamber. Water from the bottom of upper chamber 47 passes through outlet 51, line 52, and enters bottom chamber 40 through inlet 53. Any entrained solids (particulate carbon and ash) are thereby scrubbed from the process gas stream and pass with the water through lines 57, 58 and 59, and inlet 60 into decanter 61.

The cleaned process gas stream leaving gas scrubber 41 through line 62 is cooled below its dew point in heat exchanger 63 by indirect heat exchange with cold water entering through line 64 and leaving by line 65. The cooled stream passes through line 66 into separation vessel 67 where the condensed water is removed from the bottom by line 68. By means of pump 69, the condensate is passed through lines 70, 71 and 48, and inlet 49 into gas scrubber 41. A portion is by-passed through line 46 into venturi 45, as previously described. The cleaned unshifted product gas stream leaves separator 67 through line 26.

The second stream of raw gas passes through line 73 and dip tube 74, and is quench cooled in a pool of water 75 in the bottom of quench tank 76. A dispersion of water and dispersed solids is removed through oulet 79 and line 80, and sent to a carbon recovery and water reclaiming section, to be further described. Periodically, ash which may build up in the bottom of quench tank 76, may be removed with some water through bottom outlet 81, line 82, valve 83, and line 84 and sent to a conventional solids separation and recovery zone. Optionally, a conventional lock-hopper system (not shown) may be used to remove the solids.

The dispersion of particulate solids and water in line 80 is cooled in heat exchanger 85, by indirect heat exchange with reclaimed water from line 86. It is then passed through line 87, and mixed in line 58 with the particulate solids-water dispersion coming from gas scrubber 41 and line 57 in the first train. The mixture is then passed into decanter 61 by way of lines 59, and inlet 60.

After being quench cooled and partially cleaned with water in quench tank 76, the process gas stream in the second train passes up through draft tube 77 and leaves by outlet 89 and line 90, and is scrubbed in orifice scrubber 91 with water from line 92. The process gas stream in line 93 enters separation vessel 94 by way of a dip tube 95. There, excess water drops out and is recycled by way of line 96, to quench tank 76. Before leaving separation vessel 94, by way of line 97, the process gas stream is sprayed with water 98 from line 99.

The cleaned water-saturated process gas stream in line 97 is preheated in heat exchanger 100 by indirect heat exchange with the shifted stream of gas leaving catalytic water-gas shift conversion zone 101 through line 102. The feed stream enters shift conversion zone 101 through line 103, and at least a portion of the CO and $H_2O$ in the process gas stream react therein to produce $H_2 + CO_2$. The resulting clean $H_2$-rich gas stream is cooled in heat exchanger 100 and is then passed through line 104 into gas cooler 105, where the temperature of gas stream is dropped below its dew point by indirect heat exchange with water. For example, boiler feed water in line 106 may be preheated in heat exchanger 105, passed through line 107, and then introduced into gas cooler 30 by way of line 31, where it is converted into steam. The cooled $H_2$-rich gas stream is passed through line 108 into condensate separator 109, where condensed water is drawn off at the bottom through line 110, and clean $H_2$-rich product gas leaves through line 27 at the top.

The various solids-containing water streams of dispersions produced in the first and second trains are introduced into the carbon-recovery and water-reclaiming section of the process. Liquid organic extractant 115, e.g. naphtha, in separation vessel 116, is passed through lines 117 to 120, and mixed in line 59 with the dispersion of water, particulate carbon, ash, and other impurities from line 58. Any required make-up liquid organic extractant may be introduced into the system through line 121, valve 122, and line 123. If desired, the liquid organic extractant in line 118 may be preheated by indirect heat exchange with the overhead from distillation column 137 in line 140. A portion of the liquid extractant in line 118 may be passed as reflux into distillation column 137 through line 125. Sufficient liquid extractant is added to the dispersion to separate the particulate carbon from the water. The mixture passes through inlet 60, as previously mentioned, and passes up through an annular passage (not shown) between concentric outer pipe 126 and inner pipe 127 in decanter 61, and then out through the lower horizontal radial nozzle 128. Simultaneously, in the second stage, a larger amount of liquid extractant from line 119 is passed through line 129, inlet 130, inner pipe 127, and upper horizontal radial nozzle 131. A dispersion comprising liquid extractant, particulate carbon, carry-over water, and other impurities, is removed through line 132 and mixed in line 133 with heavy liquid hydrocarbon fuel oil from line 134. The mixture is heated in heater 135, and passed through line 136 into distillation column 137, equipped with reboiler 138. A slurry of heavy liquid hydrocarbon and particulate carbon is removed through line 139 at the bottom of column 137 and introduced into gas generator 15 as a portion of the fuel. The hot vapours in line 140 are passed into cooler 141 and cooled below the dew point. The resulting mixture of uncondensed gases, liquid extractant, and water is passed through line 142 into separation vessel 116. Liquid organic extractant 115 floats on a layer of water 143 in separation vessel 116. Uncondensed gases are removed through line 144. The gas stream comprises at least one of the gases $H_2S$, $NH_3$, $CO_2$, and hydrocarbon vapours, and may be introduced into a Claus operation (not shown) for recovery of sulphur, or may be burnt. At least a portion of the water is removed through line 145, and pumped by pump 146 through line 147 on to stripping plate 148 of flash column 149. Optionally, a portion of the water may be passed to gas generator 15 as a temperature moderator.

Stripping plate 148 is substantially round, except for one chordal side and is equipped with a plurality of dispersing means, constituted by vapour risers 150 and bell-caps 151. Vertical weir 157 divides the bottom of flash-column 149 into return-water side chamber 156 (second chamber) and receiving side chamber 158 (first chamber). Steam-stripped water 152 on plate 148 overflows vertical chordal weir 153 attached to the end of plate 148. The stripped water falls into downcomer 154 and discharges beneath the water level 155 in chamber 156. That portion of the water which is not flashed builds up in receiving side chamber 158 until water level 159 is reached, when it overflows weir 157. Deflection shield or baffle 160 prevents unflashed water from dropping into chamber 156. Make-up water may be added through line 161.

In operation, the stream of water, dissolved gases ($H_2S$, $NH_3$ or $CO_2$), and particulate solids separated in decanter 61 is introduced into flash column 149, below stripping plate 148 by way of line 162, pressure reducing valve 163, and line 164. If desired, for control of the total dissolved solids in the boiler feed water, a stream of water produced by blowing down a minor portion of the water in gas cooler 30, is also introduced into flash column 149 below stripping plate 148, and preferably below baffle 160, by way of line 165, pressure reducing valve 166, line 167 and internal pipe 168. At least a portion of stream 164 is flashed into steam and the remainder falls into receiving side chamber 158. There are practically no particulates in the water in line 168. At least a portion of this stream is flashed into steam and the remainder falls into chamber 156.

Water 143 at the bottom of separation vessel 116 contains dissolved gases ($H_2S$, $NH_3$, $CO_2$ and waste hydrocarbons) and is pumped by means of pump 146 on to stripping plate 148 in flash column 149 by way of lines 145 and 147. Steam in the space under plate 148 passes up through riser 150 and is deflected by bell-cap 151 through the water contained on stripper plate 148. The vapors leaving flash column 149 through line 175 are cooled below the dew point of water in cooler 176, and are passed through line 177 into separation vessel 171. A layer of liquid waste hydrocarbons 178 floats on the pool of water 170 at the bottom of the separation vessel, and may be drawn off through line 179. This stream may be mixed with the hydrocarbonaceous fuel in line 22 and burned in gas generator 15. A gas stream consisting of at least one of the gases $H_2S$, $NH_3$ and $CO_2$, may be drawn off from separation vessel 171 through line 180. Optionally, this gas may be sent to a Claus unit (not shown) for recovery of sulphur. Water 170 may be drawn off from the bottom of separation vessel 171 and pumped on to stripping plate 148 in flash column 149 by means of pump 172 and lines 173 and 174.

The purified reclaimed water from the bottom of return-water side chamber 156 in water-flash column 149 is pumped by means of pump 181 to gas scrubber 41 in train I by ways of lines 182, 183, 184, 71 and 48, and inlet 49; and also by line 46 to venturi scrubber 45. A second stream of purified reclaimed water from chamber 156 is pumped through lines 182, 183 and 86; heat exchanger 85; and lines 185, 186 and 99 to separation vessel 94, and also by line 92 to orifice scrubber 91.

Waste water containing solids is removed from the receiving-side chamber 158 and is discharged from the system through line 190.

In the subject process, a raw gas stream, substantially comprising $H_2$, CO, and at least one of the gases $H_2O$, $CO_2$, $H_2S$, COS, $CH_4$, $NH_3$, $N_2$ and Ar, and containing entrained solids, e.g. particulate carbon and ash, is produced by partial oxidation of a hydrocarbonaceous fuel with a free-oxygen containing gas, optionally in the presence of a temperature moderator, in the reacton zone of an unpacked free-flow non-catalytic partial-oxidation gas generator. The atomic ratio of free oxygen to carbon in the fuel (O/C ratio), is generally in the range of 0.6 to 1.6, and preferably 0.8 to 1.4. The reaction time is generally in the range of 1 to 10 seconds, and preferably 2 to 6 seconds. When steam is used as the temperature moderator, the steam-to-fuel weight ratio in the reaction zone is generally in the range of 0.1 to 5, and preferably 0.2 to 0.7.

The raw gas stream leaves the reaction zone at a temperature from 705 to 1650°C (1300 to 3000°F), and preferably 1095 to 1540°C (2000 to 2800°F), and at a pressure of 98 to 24520 Kilo pascals (KPa) (1 to 250 atmospheres), and preferably 1470 to 14710 KPa (15 to 150 atmospheres).

The compositon of the raw gas stream leaving the gas generator is generally, (in mole % on a dry basis): $H_2$ 60 to 29; CO 20 to 57; $CO_2$ 2 to 30; $CH_4$ nil to 25; $H_2S$ nil to 2; COS nil to 0.1; $NH_3$ nil to 0.1; $N_2$ nil to 60; and Ar nil to 0.5. Water is present in the gas in an amount of 1 to 75 mole %. Particulate carbon is present in an amount of 0.1 to 20 weight % (basis carbon content in the original feed). Ash may be present. Depending on the composition, the gas stream may be employed as synthesis gas, reducing gas, or fuel gas.

The gas generator comprises a vertical cylindrically shaped steel pressure vessel lined with refractory, such as shown in U.S. Patent No. 2,809,104. A typical quench drum for cooling the hot effluent stream of gas from the reaction zone to a temperature in the range of 150 to 315°C (300°F to 600°F) by direct contact with water is also shown in said patent. At least a portion of the entrained solids (particulate carbon and ash) are removed from the process gas stream by the turbulent quench water and a pumpable dispersion of particulate carbon and water containing 0.1 to 4.0 wt. % particulate solids is produced in the quench tank. Any remaining entrained solids may be removed from the process gas stream by additional scrubbing with water. A burner, such as shown in U.S. Patent No. 2,928,460, may be used to introduce the feed streams into the reaction zone.

Alternatively, the hot effluent gas stream leaving the gas generator may be cooled to a temperature from 175 to 400°C (350° to 750°F) but above the dew point of water, by indirect heat exchange with boiler fed water in a gas cooler, such as shown and described in U.S. Patent No. 3,920,717. The cooled process gas stream is then cleaned by scrubbing with water in a conventional gas scrubbing zone. For example, the gas scrubber as shown in the Drawing, or the venturi or jet scrubber as shown in Perry's Chemical Engineer's Handbook, Fifth Edition, McGraw-Hill Book Company 1973, Fig. 20—120 and Fig. 20—121.

In the embodiment shown in the Drawing, both methods of cooling the effluent gas stream from the gas generator are employed. The effluent gas stream is split into two separate gas streams which are processed in two separate trains. A portion of the hot effluent gas stream is cooled by indirect heat exchange in a gas cooler in the first train; and the remainder of the gas stream is cooled by direct contact with water in a quench tank in the second train.

A wide range of combustible carbon-containing organic materials may be reacted in the gas generator with a free-oxygen containing gas, optionally in the presence of a temperature-moderating gas, to produce the raw gas stream.

The term "hydrocarbonaceous" is used herein to mean substantially any combustible carbon-containing organic material, or slurries thereof. For example, there are (1) pumpable slurries of solid carbonaceous fuels, such as particulate carbon dispersed in a vaporizable liquid carrier, such as water, liquid hydrocarbon fuel, and mixtures thereof; and (2) gas-liquid-solid dispersions, such as atomized liquid hydrocarbon fuel and particulate carbon dispersed in a temperature moderating gas.

The term "liquid hydrocarbon" covers various materials, such as liquefied petroleum gas, petroleum distillates and residua, gasoline, naphtha, kerosine crude petroleum, asphalt, gas oil, residual oil, tar-sand oil and shale oil, coal derived oil, aromatic hydrocarbons (such as benzene, toluene or xylene fractions), coal tar, cycle gas oil from fluid-catalytic-cracking operations, furfural extract of coker gas oil, and mixtures thereof.

Gaseous hydrocarbon fuels include methane, ethane, propane, butane, pentane, natural gas, coke-oven gas, refinery gas, acetylene tail gas, ethylene off-gas, and mixtures thereof. Solid, gaseous, and liquid feeds may be mixed and used simultaneously; and these may include paraffinic, olefinic, acetlyenic, naphthenic, and aromatic compounds in any proportion.

The term "hydrocarbonaceous" also covers oxygenated hydrocarbonaceous organic materials including carbohydrates, cellulosic materials, aldehydes, organic acids, alcohols, ketones, oxygenated fuel oil, waste liquids and by-products from chemical processes containing oxygenated hydrocarbonaceous organic materials, and mixtures thereof.

The hydrocarbonaceous feed may be at room temperature, or it may be preheated to a temperature e.g. from 315 to 650°C (600 to 1200°F) but preferably below its cracking temperature. The hydrocarbonaceous feed may be introduced into the gas-generator burner in liquid phase or in a vaporized mixture with the temperature moderator.

The need for a temperature moderator to control the temperature in the reaction zone depends in general on the carbon-to-hydrogen ratios of the feedstock and the oxygen content of the oxidant stream. A temperature moderator may not be required with some gaseous hydrocarbon fuels, but one is generally used with liquid hydrocarbon fuels and with substantially pure oxygen. Steam may be introduced as a temperature moderator in admixture with either or both reactant streams. Alternatively, the temperature moderator may be introduced into the reaction zone of the gas generator by way of a separate conduit in the burner. Other temperature moderators include $CO_2$, $N_2$, a cooled portion of the effluent gas stream from the gas generator, and mixtures thereof.

The term free-oxygen containing gas as used herein means air, oxygen-enriched-air i.e. greater than 21 mole % $O_2$, and substantially pure oxygen, i.e. greater than about 95 mole % oxygen (the remainder usually comprising $N_2$ and rare gases). Free-oxygen containing gas may be introduced by way of the partial-oxidation burner at a temperature from ambient to 985°C (1800°F).

The raw synthesis gas leaving the reaction zone 18 of the gas generator 15 is preferably split into two streams, which are then simultaneously processed in two separate trains. In the first train, no water-gas shifting takes place, whereas in the second train, water-gas shifting of the crude gas stream does take place. By this means, the product gas from the second train has a greater mole ratio of $H_2/CO$ than that produced in the first train.

The division of the raw synthesis gas between the two trains may be determined by material and heat balances. The calculated division may be then adjusted, if necessary, during actual operation. Accordingly, said calculations take into consideration the compositions of the hydrocarbonaceous fuel and the raw synthesis gas, the amount and desired composition of the clean purified synthesis gas product stream, the desired amount of hydrogen rich product gas, the desired amount and efficiency of the catalytic water-gas shift conversion, and the desired amount of by-product steam. For example, from 0 to 100 volume %, e.g. 5 to 95 volume %, of the raw gas stream leaving the reaction zone of the gas generator may be directly introduced into quench tank 76 containing water in the second train. When the feed to the gas generator includes a high ash fuel, e.g. coal, from 5 to 10 volume % of the raw gas stream may be introduced into the quench tank to carry the slag. The remainder of the synthesis gas from the gas generator may be passed through an insulated transfer line, and directly into gas cooler 30 in the first train, where the hot gases are passed in indirect heat exchange with boiling water, thereby cooling the gas stream to a temperature in the range of 175 to 400°C (350 to 750°F), while simultaneously producing by-product steam.

The by-product steam may be used elsewhere in the process where required. Further, it may be produced at a pressure which is greater than that in the gas generator. Portions of the by-product steam may be used, for example, as the temperature moderator in the gas generator, as a carrier for the hydrocarbonaceous fuel, or as the working fluid in an expansion turbine; e.g. a turbocompressor or turboelectric generator. The steam may also be used to power an air-separation unit that produces the substantially pure oxygen used in the gas generator.

The amount of solid particles, entrained in the raw gas stream leaving the reaction zone is dependent upon the type of hydrocarbonaceous fuel and the atomic ratio (O/C) in the reaction zone. A minimum amount of entrained particulate carbon e.g. 1 to 2 wt. % (basis weight of C in the hydrocarbonaceous feed), is recommended to increase the life of the refractory lining the gas generator when the feed contains nickel and vanadium impurities.

The quench tank in the second train, is located below the reaction zone of the gas generator. The split stream of raw gas which it receives for cooling and cleaning, carries with it substantially all of the ash and a substantial part of the particulate-carbon soot leaving the reaction zone of the gas generator. A dispersion is produced in the quench tank comprising quench water, 0.1 to 4.0 wt. % of particulate solids and a minor amount of water-soluble impurities. Any unburned inorganic solids, such as coarse ash from solid fuels, and refractory, may accumulate at the bottom of the quench tank. Periodically, this material may be removed as a water slurry through a conventional lock-hopper system. Optionally, water may be separated from this slurry by conventional means, e.g. gravity settling, flotation, centrifuging, or filtration. The water may be recycled in the process for further purification along with the quench water.

To prevent plugging of any downstream catalyst beds, a secondary gas cleaning zone preferably follows the quench tank in the second train. The secondary gas cleaning zone may include conventional orifice and venturi scrubbers and sprays by which the process gas stream is scrubbed with reclaimed water. The scrub water containing less than 0.1 wt. % solids is preferably recycled to the quench tank. By this means the amount of solid particles in the process gas stream may be reduced to less than 3 parts per million (ppm), and preferably less than 1 ppm. The mole ratio of $H_2O/CO$ in the process gas stream in the second train may be increased to a value of 2 to 5, and preferably 2.5 to 3.5, by vaporizing water during the quenching and scrubbing steps that may follow. This ratio is suitable for the next step in the second train, in which the water-gas shift reaction takes place.

Thus, after leaving the secondary gas scrubbing zone, the soot-free gas stream in the second train is preferably introduced into a conventional catalytic water-gas shift reaction zone 101 at an inlet temperature of 175 to 415°C (350 to 775°F). CO and $H_2O$ are reacted over a conventional water-gas-shift catalyst which may comprise iron oxide mixed with chromium oxide, and promoted by 1 to 15 wt. % of an oxide of another metal, such as K, Th, U, Be, or Sb. Reaction occurs at 260 to 565°C (500 to 1050°F). Alternatively, cobalt molybdate on alumina may be used as the water-gas shift catalyst at a reaction temperature in the range of 260 to 485°C (500 to 900°F). Co-Mo catalysts comprise, in weight percent: CoO 2—5, $MoO_3$ 8—16, MgO nil-20, and $Al_2O_3$ 59—85. A low-temperature shift catalyst for use with sulphur-free gas streams comprises a mixture of copper and zinc salts or oxides in a weight ratio of 0.5 to 3 parts of zinc to 1 part of copper.

Next, substantially all of the $H_2O$ is removed from the gas stream in the second train. For example, the clean gas stream may be cooled to a temperature below the dew point of water by conventional means to condense out and to separate $H_2O$. If desired, the gas stream may be substantially dehydrated by contact with a desiccant, such as alumina. With oxygen gasification, a clean shifted product gas stream is thereby produced having the following composition in mole %: $H_2$ 98 to 60, CO nil to 5, $CO_2$ 15 to 40, $CH_4$ nil to 5, $H_2O$ nil to 5, Ar nil to 0.5, $N_2$ nil to 1, $H_2S$ nil to 2, and $NH_3$ nil to trace.

The cooled process gas stream leaving the gas cooler 30 in the first train is scrubbed with water in a conventional gas scrubber 41 to remove particulate solids. A dispersion of scrubbing water containing 0.1 to 4.0 wt. % of particulate solids, and a minor amount (of the order of parts per million) of water-soluble impurities is produced. The gas stream leaving the cleaning zone in the first train is optionally cooled below the dew point, and is then introduced into knock-out or separation vessel 67. With oxygen gasification, a clean unshifted product gas stream is thereby produced having the following composition in mole %: $H_2$ 60 to 29, CO 20 to 57, $CO_2$ 2 to 30, $CH_4$ nil to 25, $H_2O$ nil to 20, $H_2S$ nil to 2, COS nil to 0.1, $NH_3$ nil to trace, $N_2$ nil to 1 and Ar nil to 0.5.

As previously described, the gas cooler 30 cools the hot raw synthesis gas by indirect heat exchange with boiler feed water. A small blow-down stream may be periodically taken from the water being vaporized to control the buildup of dissolved solids in the water. The blow-down water leaving the gas cooler may contain a minor amount (of the order of parts per million) of metal salts e.g. chlorides, sulfates, and phosphates. The blow-down water stream leaves the gas cooler (waste-heat boiler) at a temperature in the range of 150 to 315°C (300° to 600°F) say about 290°C (550°F). The pressure corresponds to that of the steam produced in the boiler.

The dispersions of water-particulate solids from the quench tank in the second train, or from the scrubbing zone in the first train, or from both, are introduced in admixture with a suitable liquid organic extractant such as light liquid hydrocarbons, e.g. naphtha, into a carbon separation zone. Conventional horizontal and vertical decanters may be employed. The liquid organic extractant may be added in one or two stages. Suitable vertical decanters, liquid organic extractants, and methods of operation are described in U.S. Patent No. 4,014,786.

In one embodiment, a two-stage decanting operation is used. A first portion of the liquid organic extractant separated downstream in the process is mixed with all of the carbon-water dispersion. The amount of liquid organic extractant is sufficient to resolve the carbon-water dispersion. This amount may be from 1.5 to 15 parts by weight of extractant per part by weight of carbon. The mixture is then introduced into the first stage of a two-stage decanting operation. Simultaneously, a second portion of the liquid organic extractant in an amount sufficient to produce a pumpable liquid organic extractant-carbon-water dispersion having a solids content from 0.5 to 9 wt. % is introduced into the second stage.

Suitable liquid organic extractants that form dispersions with particulate carbon which are lighter than water include: (1) light liquid hydrocarbon fuels with 5 to 16 carbon atoms, having an atmospheric boiling point in the range of 35 to 400°C (100° to 750°F) and a density of 934 to 611 Kg.m$^{-3}$ (20 to 100 degrees API), (2) a mixture of substantially water insoluble liquid organic by-products from an oxo or oxyl process; and (3) mixtures of types (1) and (2). Examples of type (1) liquid extractants include butanes, pentanes, hexanes, toluol, natural gasoline, gasoline, naphtha, gas oil, and mixtures thereof. Ingredients of type (2) extractants include at least one alcohol, at least one ester and at least one aldehyde, ketone, ether, acid, olefin, or saturated hydrocarbon.

The particulate solids in the water dispersions introduced into the decanter comprise carbon and ash. The particulate carbon is in the form of free-carbon black or soot. The Oil Absorption No. of the carbon soot, as determined by ASTM Method D—281, is greater than 1, and usually varies from 2 to 4 ml. of oil per gram of carbon. The inorganic ash from the oil in these dispersions comprises metals and sulfides thereof. For example, for petroleum derived fuels, these metals may be Ni, V, and Fe. Further, for such fuels, the amount of soluble impurities in the dispersions of water-particulate solids comprise in parts per million: ammonia 0 to 10,000; formate 0 to 10,000; sodium chloride 0 to 5000; nickel 0 to 25; iron 0 to 150; sulfide 0 to 500; and cyanide 0 to 100.

One or two-stage decanters may be employed. The decanter is operated at a temperature in the range of 80 to 260°C (180° to 500°F) and preferably above 120°C (250°F). The pressure in the decanter is fundamentally determined by the temperature. The pressure must be high enough to keep the liquid organic extractant in a liquid phase. Thus, when the decanter bottoms outlet temperature is 149°C (300°F), and the liquid organic extractant is naphtha, the pressure in the decanter may be at least 2068 KPa (300 psia). The total amount of liquid organic extractant that may be introduced into a one or two-stage decanting operation is in the range of 10 to 200, times, e.g. 30 to 70 times, the weight of the particulate carbon in the carbon-water dispersion. The dispersion of water and particulate solids is resolved in the decanter. A stream of water containing 100 to 500 parts per million by weight of the particulate carbon and 20 to 60 wt. % of the ash separates out by gravity and leaves at the bottom of the decanter. Most of the other impurities in the dispersions of water-particulate solids that enter the decanter in the feed, as mentioned previously are also included in this water stream that leaves from the bottom of the decanter. This dilute water dispersion leaves the decanter at a temperature in the range of 80 to 260°C (180° to 500°F), e.g. 120 to 175°C (250° to 350°F) and a pressure of 1130 to 6990 KPa (150 to 1000 psig), e.g. 1820 to 3545 KPa (250 to 500 psig). The water may contain gaseous impurities (e.g. $H_2S$, $CO_2$ and $NH_3$). The residence time in the decanter may be in the range of 2 to 20 minutes, e.g. 6 to 15 minutes.

A dispersion of carbon-liquid extractant containing 0.5 to 9 wt. % of particulate carbon and 0.5 to 10 wt. % of carry-over water is removed from the top of the decanter 61. In a preferred embodiment, this stream is mixed with a heavy liquid hydrocarbon fuel i.e. fuel oil, crude oil having a density of 934 to 1269 Kg.m$^{-3}$ (−20 to 20 degrees API). The mixture is then introduced into distillation column 137. The amount of heavy liquid hydrocarbon fuel, as previously described, is kept to a minimum. This amount should be sufficient only to form a pumpable bottoms slurry with the particulate carbon separated from said carbon-extractant dispersion. The aforesaid pumpable bottoms slurry may have a carbon content of 0.5 to 25 wt. percent, preferably 4 to 8 wt. percent. The slurry of carbon and heavy liquid hydrocarbon is removed from the bottom of the distillation column 137 and sent to the gas generator as a portion of the feed. The overhead vapours from the distillation column are cooled to a temperature below the dew points of the liquid organic extractant and water. The liquid organic extractant, and water containing any dissolved acid-gases and a minor amount of hydrocarbons extracted by the water from the liquid organic extractant and the heavy hydrocarbonaceous liquid, settle out and are separated in a separation vessel 116. At least a portion, and preferably all, of the liquid organic extractant is removed from the separation vessel 116 and is recycled to the inlet of the decanter 61 where it is introduced with the incoming dispersion of water and particulate carbon. Optionally, a portion of the liquid organic extractant may be recycled to the distillation column 137 as reflux. At least a portion of the water layer is removed from the bottom of the separation vessel 116 at a temperature of 25 to 65°C (80° to 150°F) and a pressure of 96.5 to 441 KPa (0 to 50 psig). Optionally, a portion of the water from the separation vessel 116 may be introduced, in liquid or vapour phase, into the gas generator 15 as a portion of the temperature moderator. Any uncondensed acid-gas may be removed from the top of the separation vessel.

In one embodiment, the hydrocarbonaceous feed to the gas generator 15 comprises liquid hydrocarbon distillate substantially comprising $C_3$ to $C_{10}$ hydrocarbons and a dispersion of particulate carbon and said liquid hydrocarbon distillate. In this case, the liquid hydrocarbon distillate is also employed as the liquid organic extractant in the decanter. The distillation column 137 may be thereby eliminated, and the overhead stream of carbon-extractant dispersion from the decanter 61 may be then introduced, with or without heat exchange, into the gas generator 15 as a portion of the feedstock.

The water employed for quench cooling and scrubbing the process gas stream is reclaimed by removing particulate solids and gaseous impurities in the flash column 149. The reclaimed water is then recycled to the gas quenching and scrubbing zones. The water flash column 149 comprises: an upright column; at least one, e.g. 1 to 5, and preferably one, horizontal stripping plate 148 spaced within said column for holding water to be stripped, each plate containing dispersing means (150, 151) for dispersing steam through the water on said stripping plate, and over-flow and downflow means for continuously discharging the steam-stripped water from plate to plate and finally into a return water-side chamber 156 below; a vertical weir 157 separates the column at the bottom into a first or receiving-side chamber 158 filled with water, and said second or return water-side chamber 156 for holding the water that overflows said vertical weir from said first chamber and the steam stripped water that overflows the stripping plate in a single plate column, or the bottom stripping plate in a multiplate column, whereby the water is discharged below the level of the liquid in said second chamber; inlet means for flashing at least one stream of water containing particulate solids into the space below the bottom strippng plate and above said first or second chambers, and inlet means for introducing at least one stream of water containing substantially no solids on to at least one stripping plate, and preferably the top stripping plate; outlet means for removing from the column an overhead stream of vapours comprising $H_2O$, hydrocarbons and at least one of $H_2S$, $NH_3$, and $CO_2$; outlet means at the bottom of said tower for removing from said second chamber a stream of reclaimed water of substantially reduced solids content; and outlet means for removing from said first chamber a stream of waste water containing particulate solids.

The top horizontal stripping plate in the flash-tower is preferably spaced from 1/3 to 3/4 of the height of the column. Conventional crossflow plates, including bubble-cap, sieve, or valve equipped with at least one down-comer may be employed. Gas dispersers include perforations in the plates or bubble caps. Perforated plates include sieve plates or valve plates. For example, sieve-plate disperers contain drilled or punched holes 3 to 12.5 mm (1/8 to 1/2 inch) in diameter. Liquid is prevented from flowing down through the perforation by the upward flowing action of the vapour. Thus, the pressure in the tower below a stripping plate is 7 to 21 KPa (1 to 3 psig) greater than the pressure in the tower above the stripping plate. With bell caps and tunnel caps, the vapour flows up through a centre riser in the plate, reverses flow under the cap, passes downward through the annulus between the riser and cap, and finally passes through the liquid on the plate through a series of peripheral openings or slots in the lower side of the cap.

The downcomer zones generally occupy 5 to 30% of the total cross section, e.g. 5 to 15% for segmental downcomers, as shown in the Drawing. Included is a vertical weir 153 which extends upwards from the stripping plate. Steam-stripped water continuously builds-up on the plate and overflows said weir. Additional information on stripping plate design may be obtained from Chemical Engineers Handbook, Robert H. Perry and Cecil H. Chilton, Fifth Edition (1973), McGraw-Hill Book Co. Pages 18—3 to 18—19.

The overhead stream of vapours leaves the water-flash column 149 at a temperature in the range of 100 to 135°C (212° to 275°F). This stream is cooled below the dew point, and water and liquid hydrocarbons are condensed out and are separated from the uncondensed gases in separate separation vessel 171. Alternatively, the separation vessel may be the same vessel that is used to receive the cooled stream of water, liquid organic extractant, and uncondensed gases from the distillation column 137, i.e. vessel 116. Any uncondensed vapours (e.g. $H_2S$, $CO_2$, $NH_3$, hydrocarbons, and mixtures thereof) are removed from the top of the separation vessel 116 or 171. Clear water is drawn off from the bottom of the separation vessel by lines 173 and 174 and pump 172 and is recycled to the water flash column 149 where it is introduced on to a stripping plate at a temperature of 25 to 80°C (80° to 175°F). In a multiplate flash column, this water stream is preferably introduced on to the top plate.

In the operation of the flash column, water streams containing substantially no solids are introduced on to a stripping plate, preferably the top plate. Solids-containing water streams, and blow-down water streams, if any, are flashed into the column to produce steam in the space below the bottom stripping plate and above the two chambers in the bottom of the column. Thus, the dilute dispersion of water and particulate solids from the bottom of the decanter 61 and at substantially the same conditions of temperature and pressure, less ordinary losses in the line, is passed through a pressure-reducing means such as an expansion valve. The pressure is dropped to 96.5 to 303 KPa (0 to 30 psig), and, for example, up to 10wt. %, e.g. 1 to 7 wt. %, is flashed into steam. The steam is introduced into the flash column below the stripping plate at the bottom of the column and in the space above the receiving side chamber 158. The steam passes up through the gas dispersers in the perforated plate, as previously described. The unvaporized portion of said stream and the dispersed solids fall into the receiving side chamber. If desired, a portion of the blow-down water stream from the gas cooler following the gas generator may be similarly passed through a pressure reducing means, such as an expansion valve, and reduced to a pressure in the range of 96.5 to 303 KPa (0 to 30 psig) before being introduced into the flash column. A portion of the water in this stream is flashed into steam, e.g. up to 25 wt. %, say 5 to 15 wt. %. This steam contains practically no particles, and may be introduced into the flash column below the bottom stripping plate and preferably in the space above the return water side chamber 156. Optionally, the blow-down water stream may be flashed into the space above the receiving side chamber. The solids-free water from the separator 116 is introduced on to a stripping plate in the flash column. Preferably, this solids-free water stream is introduced in the space at the upper part of the flash column above the top tray. Fresh water make-up may be introduced into the return water side chamber 158 of the flash column.

Reclaimed water containing from 0 to 0.05 wt. % of particulate solids may be withdrawn from the return water side chamber 156 at a temperature in the range of 100 to 135°C (212° to 275°F) and a pressure in the range of 96.5 to 303 KPa (0 to 30 psig), and recycled to the scrubbing zone in the first train, the scrubbing and quench zones in the second train, or to both trains. Optionally, a portion of this water may be recycled to the gas generator. A stream of waste water at substantially the same temperature and pressure as the reclaimed water may be removed from the receiving chamber 158 and discharged from the system. The waste water stream may contain 0 to 0.2 wt. % particulate solids, and the following soluble impurities in ppm: amonia 0 to 10,000; formate 0 to 10,000; sodium chloride 0 to 5,000; sulfide 0 to 500; nickel 0 to 25; iron 0 to 150, and cyanide 0 to 100.

In one embodiment of the invention, emulsion-forming impurities are present in the heavy liquid hydrocarbon fuel or in the liquid organic extractant. In such case, when the overhead from the distillation column is cooled below 60°C (140°F), emulsions may separate out in the separation vessel following the distillation column 137. The liquid organic extractant will then float on the emulsion layer, and the emusion layer will float on the bottom water layer, if present. The liquid aqueous emulsion comprises in wt. %: water 93 to 96, heavy liquid hydrocarbon 0.05 to 0.5, naphthenic acid 0.002 to 0.20, asphaltene or scale 0.002 to 0.20, and the remainder liquid organic extractant. The aqueous emulsion comprises 0.5 to 10 wt. % of the overhead from the distillation column and, if not disposed of, will upset the settling tank. The liquid organic extractant and the aqueous emulsion may be separately removed and recycled to the decanter where they may be introduced into either a one-stage, or a two-stage decanter.

In the embodiment of the process in which a single-stage decanter is used, all of the liquid aqueous emulsion and at least a portion, e.g. 90 to 100 vol. % and preferably all, of the liquid organic extractant are mixed together with the water-particulate solids dispersion, and the mixture is introduced into the decanter. Optionally, a mixing valve or other suitable conventional in-line mixer may be used. The emulsion is usually completely broken up into its constituents before the mixture enters the decanter. In the operation of a continuous two-stage decanter, such as described in U.S. Patent 4,014,786, a portion of the liquid organic extractant is simultaneously added in both stages. For example, in a given period of time, there is introduced into the first stage of the decanter a mixture comprising (a) from 0 to 100 wt. % (and preferaby 100 wt. %) of the liquid aqueous emulsion that is produced during said period at a temperature in the range of 26.5 to 60°C (80 to 140°F), (b) all of said carbon-water dispersion being introduced during said period at a temperature of 80 to 260°C (180 to 500°F), say 120 to 177°C (250 to 350°F), and (c) an amount of the liquid organic extractant at a temperature of 26.5 to 120°C (80 to 250°F) which is sufficient to resolve said carbon-water dispersion. The pressures of streams (a), (b) and (c) are about the same and are in the range of 1080 to 6965 KPa (10 to 70 Atm.), say about 3530 KPa (35 Atm.). Simultaneously, the remainder, if any, (from 0 to 100 wt. %) and preferably 0 wt. % of the liquid aqueous emulsion produced during said period, in admixture with the remaining portion of said liquid organic extractant e.g. an amount which is sufficient to produce a pumpable liquid organic extractant-particulate carbon-water dispersion, having a solids content in the range of 0.5 to 9.0 wt. %, is introduced into the second stage of said two-stage decanter. In the first stage of said process, the aqueous emulsion may be mixed with the water-carbon dispersion. The liquid organic extractant may be then added to this mixture. Alternatively, the carbon-water dispersion may be mixed with the liquid organic extractant and the liquid aqueous emulsion may be then added to this mixture.

In another embodiment, all of the aqueous emulsion produced during the period at a temperature in the range of 26.5 to 60°C (80° to 140°F) is mixed with all of the bottoms water layer leaving the decanting operation during the same period at a temperature of 80 to 260°C (180 to 500°F), say 120 to 180°C (250 to 350°F), thereby breaking the emulsion. The resulting mixture is then passed into water flash column 149. The water from the bottom of the separation vessel may be separately introduced into the water flash column.

### Example

The following example illustrates a preferred embodiment of the process of this invention as shown in the Drawing. The process is continuous and the flow rates are specified on an hourly basis for all streams of materials.

73710 Kg. (162,356 lbs.) of a vacuum residuum having a density of 1060 Kg.m⁻³ (2.0 degrees API). An Ultimate Analysis in weight percent as follows: C 83.20, H 10.07, N 0.35, S 5.48, O 0.60, and ash 0.3 comprising (in parts per million by weight), vanadium 300 and nickel 50, and a maximum salt content of 28.6g. m⁻³ (10.0 pounds per thousand barrels), are mixed with 1255 Kg. (2765 pounds) of recycled unreacted particulate carbon recovered downstream in the process to produce a pumpable dispersion of particulate carbon and petroleum oil. The oil-carbon dispersion is pumped through a heater where it is brought up to a temperature of 282°C (540°F) and a pressure of 8129 KPa (1165 psig.) The dispersion is then mixed with a stream of 29484 Kg. (64,942 lbs.) of steam at a temperature of 301°C (574°F) and a pressure of 8129 KPa (1165 psig) from line 20 in the Drawing.

The oil-carbon-steam mixture is fed to the burner in synthesis gas generator 15.

Simultaneously, a stream of 77649 Kg. (171.033 lbs.) of substantially pure oxygen (99.5 mole % O₂) from line 19 is passed through the centre passage of the burner. The two streams impinge and mix, and the partial oxidation and other related reactions then take place in the reaction zone of the gas generator.

A stream of 244832 m³ (at 15°C and 101.325 KPa) [8.69 million standard cubic feet (SCF measured at 60°F, 14.7 psia)] of raw gas leave the reaction zone of the gas generator at a temperature of 2596°F and a pressure of 7336 KPa (1050 psig). The composition of the raw gas at the exit 23 from reaction zone 18 is shown in Column 1 of the Table. 1255 Kg. (2765 lbs) of unreacted carbon plus ash are entrained in the raw synthesis gas.

The raw effluent gas stream leaving the reaction zone is split into two streams of 24: 159183 m³ (5.65 million SCF) of raw gas are processed in a first train, where no water-gas shift reaction takes place; and the remainder, 85649 m³ (3.04 million SCF) of raw gas are simultaneously processed in the second train, where shifting takes place. The raw gas stream leaving gas cooler 30 in line 36 of the first train is cleaned in gas scrubber 41. After substantially all of the entrained carbon and ash are scrubbed from the raw gas stream, and the gas stream is cooled below the dew point to condense out substantially all of the water, the composition of the unshifted product gas stream in line 26 is shown in column 2 of the Table.

About 81.5 m³h⁻¹ [21,540 gallons per hr. (GPH)] of a water disperson containing 1 wt. % of particulate solids are removed from gas scrubber 41 through line 57 at a temperature of 154°C (310°F), and a pressure of 6026 KPa (860 psig). The solids content of this water stream is reduced and the water is reclaimed for recycle to gas scrubber 41 in the manner to be further described.

By passing all of the raw gas from the reaction zone 18 through a passage of reduced diameter at 23, the rate of flow may be accelerated and the velocity of the solid particles entrained in the gas stream may be increased. Accordingly, a large proportion of the solid particles may be entrained in the second split stream of raw gas which is directly quenched in the water contained in quench tank 76 located below the gas generator. The actual division of the gas stream between the first and second trains may be controlled by back pressure valves in each line.

The stream of 199190 m³ (7.07 million SCF) of raw gas stream in line 97 is saturated with water as the result of being quenched in quench tank 76 and scrubbed with water in scrubber 91 and spray 98. The gas stream in line 97 has the composition shown in column 3 of the Table. 199190 m³ (7.07 million SCF) of effluent gas leaving catalytic water-gas shift conversion zone 101 through line 102 has the composition shown in column 4 of the Table. After being cooled by indirect heat exchange below the dew point, the shifted product gas stream in line 27 has the composition shown in Column 5 of the Table.

After 43.9 m³h⁻¹ (11,590 GPH) of a water dispersion containing about 1 wt. % of particulate solids are removed from quench tank 76 by way of line 80 at a temperature of 238°C (460°F) and a pressure of 6302 KPa (900 psig).

The water-particulate solids dispersions in line 57 and 80 are mixed together and resolved in decanter 61 in the manner previously described. 123.1 m³h⁻¹ (32,520 GPH) of a water dispersion containing 0.03 wt. % of particulate solids are removed from decanter 61 through line 162 at a temperature of 149°C (300°F) and a pressure of 2165 KPa (300 psig.) This stream is passed through valve 163 where the pressure is dropped to 234.4 KPa (20 psig). At least a portion of this stream is converted into steam. The stream passes through line 164 and enters flash column 149 below stripping plate 148.

Periodically, blow-down water from gas cooler 33 at a temperature of 296°C (564°F) and a pressure of 8025.5 KPa (1150 psig) is passed through line 165 and through valve 166 where the pressure is reduced to 234.4 KPa (20 psig). At least a portion of this stream is converted into steam. The stream enters flash column 149 through line 167 and then passes through pipe 168 into the space below baffle plate 160. The steam rises up through the column and the unvaporized water falls into chamber 156.

1.25 m³h⁻¹ (331 GPH) of water are separated from the overhead stream from decanter 61 in the manner previously discussed and collected in separation vessel 116. This water at a temperature of 60°C (140°F) and a pressure of 234.4 KPa (20 psig) is pumped through line 147 and is introduced on to stripping plate 148 of flash column 149. The overhead from flash column 149 is cooled below the dew point. Water separates out in separation vessel 171. 4.96 m³h⁻¹ (1310 GPH) of this water at a temperature of 63°C (145°F) and a pressure of 234.4 KPa (20 psig) are pumped through line 174 on to stripping plate 148 of flash column 149.

110.9 m³h⁻¹ (29,300 GPH) of reclaimed water at a temperature of 126°C (259°F) and a pressure of 234.4 KPa (20 psig) are withdrawn from return water side 156 of flash column 149 by way of line 182. A portion of the reclaimed water in line 182 is recycled to gas scrubber 41 in the first train. Another portion of the reclaimed water in line 182 is recycled to orifice scrubber 91 and water sprayer 98 in the second train. 13.63 m³h⁻¹ (3,600 GPH) of waste water in receiving side chamber 158 of flash column 149 is withdrawn through line 190 and is discharged from the system.

TABLE — GAS COMPOSITION — MOLE %

| Column No. | 1 | 2 | 3 | 4 | 5 |
|---|---|---|---|---|---|
| Drawing Reference No. | 23 | 26 | 97 | 102 | 27 |
| **Composition** | | | | | |
| $CO$ | 44.56 | 49.25 | 19.16 | 0.80 | 1.39 |
| $H_2$ | 39.87 | 44.06 | 17.14 | 35.51 | 61.96 |
| $CO_2$ | 4.27 | 4.72 | 1.83 | 20.23 | 35.31 |
| $H_2O$ | 9.52 | — | 61.10 | 42.69 | — |
| $CH_4$ | 0.36 | 0.40 | 0.15 | 0.16 | 0.27 |
| $Ar$ | 0.12 | 0.13 | 0.05 | 0.05 | 0.09 |
| $N_2$ | 0.09 | 0.10 | 0.04 | 0.04 | 0.07 |
| $H_2S$ | 1.15 | 1.27 | 0.50 | 0.52 | 0.91 |
| $COS$ | 0.06 | 0.07 | 0.03 | — | — |

## Claims

1. A process for producing gaseous mixtures comprising $H_2$ and CO, by the partial oxidation of a hydrocarbonaceous fuel with a free-oxygen containing gas in a non-catalytic gas generator (15) at a temperature of 705 to 1650°C and a pressure in the range of 98 to 24520 kPa, cooling the resulting gas stream and contacting the gas stream with water, thereby removing solids and producing a clean gas stream and a carbon-water dispersion containing any ash, mixing a liquid organic extractant with said carbon-water dispersion, and separating by gravity in a decanter (61) a liquid extractant-particulate carbon dispersion containing gaseous impurities and a dilute water stream containing carbon, ash and gaseous impurities characterized by (a) introducing said dilute water stream from decanter (61) at reduced pressure into a vertical flash column (149) having a vertical weir (157) extending upwards from the bottom thereof and separating the lower portion of said column into a first bottoms chamber (158) and a second bottoms chamber (156), at least one horizontal stripping plate (148) within said column above said weir, the plate or each plate having dispersing means (150, 151) for dispersing steam through water held on said plate, overflow and downflow means (153, 154) for discharging water from said plate or from plate to plate and then into said second chamber, below the level of water in said second chamber, first inlet means leading into the space below the bottom stripping plate and above said weir, second inlet means leading into the space above at least one stripping plate, first outlet means leading from said first chamber, second outlet means leading from said second chamber, and third outlet means leading from the upper part of said column, said dilute water stream being introduced through said first inlet, thereby vaporizing a portion of said water stream, and passing the vapors up through said dispersive means in each stripping plate and through the water contained on each plate thereby stripping gases from the water on each plate, and introducing the unvaporized portion of said water stream into said first bottoms chamber; (b) removing from said flash column through said third outlet, a stream of vapors comprising $H_2O$, hydrocarbons and at least one of the groups $H_2S$, $NH_3$, and $CO_2$; (c) cooling said vapor stream condensing and separating liquid water and liquid hydrocarbon from the uncondensed gases, and introducing at least a portion of said water through said second inlet on to a stripping plate in said flash column; (d) removing waste water containing solids from said first bottoms chamber through said first outlet, and discharging it from the system; and (e) removing reclaimed water from said second bottoms chamber through said second outlet, and recycling at least a portion thereof to said gas cleaning operation.

2. A process as claimed in Claim 1 characterized in that blow-down water from a gas cooler is flashed into the flash column (149) below its bottom stripping plate.

3. A process as claimed in Claim 1 or 2 characterized in that the liquid extractant-particulate carbon dispersion from decanter (61) is either fed directly to generator (15) as at least a portion of said hydrocarbonaceous fuel, or said dispersion is mixed with a heavy liquid hydrocarbon and the resulting mixture is distilled in column (137) to form a heavy liquid hydrocarbon-particulate carbon dispersion, which is fed to generator (15) as at least a portion of said hydrocarbonaceous fuel, and an overhead vapor stream comprising extractant, water vapor and said gaseous impurities, and said overhead vapor stream is condensed and the resulting condensate is separated in separation vessel (116) into liquid extractant, and liquid water which is injected into said flash column (149) above a stripping plate as at least a portion of said dilute water stream.

4. A process as claimed in Claim 3 characterized in that water separated in separation vessel (116) is introduced at a temperature in the range of 25 to 65°C., on to the stripping plate, the water stream from decanter (61) having a temperature of 80 to 260°C., and a pressure of 1130 to 6990 kPa is passed through a pressure reducing means and reduced to a pressure of 96.5 to 303 kPa before being introduced into flash column (149) below said stripping plate, thereby vaporizing a portion of said water, and the pressure in said flash column below each stripping plate is 7 to 21 kPa greater than the pressure in the column above said stripping plate; the stream of vapors removed from the flash column is at a temperature of 100 to 135°C., the liquid water from step (c) is introduced into the flash column at a temperature of 25 to 80°C., and waste water and reclaimed water are removed from said first and second chambers at a temperature of 100 to 135°C.

5. A process as claimed in any preceding Claim characterized in that a portion of the water from the second bottoms chamber (156) is recycled to the gas generator (15).

6. A process as claimed in any preceding Claim characterized in that the cooled and condensed stream of vapors in step (c) is introduced into a separate gas-liquid separation zone (171) where separation takes place.

7. A process as claimed in any of Claims 3 to 5 characterized in that the cooled and condensed stream of vapors in step (c) is separated into individual liquid components in liquid-liquid separation vessel (116).

8. A process as claimed in any of Claims 3 to 7 wherein one of the individual liquid components formed in separation vessel (116) is an emulsion which is broken up by being mixed with said carbon-water dispersion and/or liquid organic extractant and introduced into decanter (61) or by being introduced into the flash column (149) in admixture with the water stream from the decanter and vaporized therein.

9. A process as claimed in any of Claims 3 to 7 wherein one of the individual liquid components formed in separation vessel (116) is an emulsion layer which is heated to break the emulsion, and then separated into water, liquid hydrocarbon mixture, and gaseous impurities, said water being vaporized in flash column (149) and said liquid hydrocarbon mixture being distilled in said distillation column (137) or recycled to said gas generator (15) as a portion of said hydrocarbonaceous fuel.

10. A flash column characterized in that it comprises an upright column (149) having a vertical weir (157) extending upwards from the bottom thereof and separating the lower portion of said column into a first chamber (158) and a second chamber (156), at least one horizontal stripping plate (148) within said column above said weir, the plate or each plate having dispersing means (150, 151) for dispersing steam through water held on said plate, overflow and downflow means (153, 154) for discharging water from said plate or from plate to plate and then into said second chamber, below the level of water in said second chamber, first inlet means for flashing at least one stream of water containing particulate solids into the space below the bottom stripping plate and above said weir, second inlet means for injecting at least one substantially solids-free stream of water into the space above at least one stripping plate, first outlet means for removing water from said first chamber, second outlet means for removing water from said second chamber, and third outlet means for removing vapors, overhead from said column.

**Revendications**

1. Procédé de production de mélange gazeux contenant $H_2$ et CO, par oxydation partielle d'un combustible à base d'hydrocarbures au moyen d'un gaz contenant de l'oxygène à l'état libre dans un générateur (15) de gaz non catalytique à une température comprise entre 705 et 1650°C et à une température comprise entre 98 et 24520 kPa, par refroidissement du courant gazeux formé et mise en contact du courant gazeux avec de l'eau, en éliminant ainsi les matières solides et en produisant un courant gazeux propre et une dispersion de carbone dans l'eau contenant des cendres, par mélange d'un agent d'extraction organique liquide avec ladite dispersion de carbone dans l'eau, et par séparation par gravité dans un décanteur (61) d'une dispersion de carbone liquide contenant des particules d'agent d'extraction ainsi que des impuretés gazeuses et un courant d'eau diluée contenant du carbone, de la cendre et des impuretés gazeuses, procédé caractérisé en ce que:

(a) on introduit le courant d'eau diluée du décanteur (61) à pression réduite dans une colonne de détente verticale (149) comportant un déversoir vertical (157) qui s'étend vers le haut à partir de son fond et séparant la partie inférieure de cette colonne en une première chambre (158) et une seconde chambre (156), au moins un plateau de rectification (148)

**0 005 138**

horizontal à l'intérieur de ladite colonne au-dessus dudit déversoir, le plateau ou chacun des plateaux ayant des moyens de dispersion (150, 151) pour disperser la vapeur par l'eau retenue sur ledit plateau, des moyens de débordement et d'écoulement (153, 154) pour évacuer l'eau dudit plateau ou de plateau en plateau et ensuite dans une seconde chambre, sous le niveau de l'eau dans ladite seconde chambre, des premiers moyens d'entrée conduisant dans l'espace situés sous la plaque de fond de rectification et au-dessus dudit déversoir, des seconds moyens d'entrée conduisant dans l'espace situés au-dessus d'au moins un plateau de rectification, des premiers moyens de sortie conduisant à partir de la première chambre, des seconds moyens de sortie conduisant à partir de la première chambre, des seconds moyens de sortie conduisant à partir de la seconde chambre, et des troisièmes moyens de sortie conduisant de la partie supérieure de ladite colonne, le courant d'eau diluée étant introduit dans la première entrée, ce qui a pour effet de vaporiser une partie de la vapeur d'eau, et à faire passer les vapeurs vers le haut au travers des moyens de dispersion dans chaque plaque de rectification et au travers de l'eau contenue sur chaque plateau ce qui a pour effet de rectifier les gaz à partir de l'eau sur chaque plateau, et à introduire la partie non vaporisée duduit courant d'eau vers la première chambre de fond;

(b) on évacue de la colonne de détente par la troisième sortie, un courant de vapeurs contenant $H_2O$, des hydrocarbures et au moins un gaz du groupe $H_2S$, $NH_3$, et $CO_2$;

(c) on refrodit le courant de vapeur, on condense et sépare l'eau liquide et l'hydrocarbure liquide à partir des gaz non condensés, et on introduit au moins une partie de l'eau par la seconde entrée en direction du plateau de rectification de la colonne de détente;

(d) on évacue l'eau usée contenant des matières solides à partir de la première chambre de fond par ladite première sortie et on l'évacue du système; et

(e) on élimine l'eau de récupération de la seconde chambre de fond par la seconde sortie, et on en remet en circuit au moins une partie pour la purification des gaz.

2. Procédé selon la revendication 1, caractérisé en ce que l'eau d'écoulement du refroidisseur de gaz est détendue dans la colonne de détente (149) sous son plateau de rectification du fond.

3. Procédé selon l'une quelconque des revendications 1 ou 2, caractérisé en ce que la dispersion de carbone contenant des particules d'agents d'extraction liquide en provenance du décanteur (61) est soit dirigée directement vers le générateur (15) comme constituant au moins une partie du combustible à base d'hydrocarbures, soit cette dispersion est mélangée à un hydrocarbure liquide de lourd et le mélange obtenu est distillé dans une colonne (137) pour former une dispersion de carbone contenant des particules d'hydrocarbure liquide, qui est dirigée vers le générateur (15) comme constituant au moins une partie de combustibles à base d'hydrocarbures, et un courant de vapeur de tête comprenant l'agent d'extraction, la vapeur d'eau et les impuretés gazeuses, et le courant de vapeur de tête est condensé et le condensat obtenu est séparé dans un réservoir de séparation (116) en agent d'extraction liquide et en eau liquide qui est introduite dans la colonne de détente (149) au-dessus de la plaque de rectification comme constituant au moins une partie du courant d'eau diluée.

4. Procédé selon la revendication 3, caractérisé en ce que l'eau séparée dans le réservoir de séparation (116) est introduite à une température comprise entre 25 et 65°C, sur le plateau de rectification, le courant d'eau en provenance du décanteur (61) ayant une température comprise entre 80 et 260°C, et une pression comprise entre 1130 et 6990 kPa est introduite au travers d'un dispositif de réduction de pression et réduite à une température comprise entre 96,5 et 303 kPa avant d'être introduit dans la colonne de détente (149) sous le plateau de rectification, ce qui produit la vaporisation d'une partie de l'eau, et la pression dans la colonne de détente sous chaque plateau de rectification est supérieure de 7 à 21 kPa à la pression de la colonne au-dessus de la plaque de rectification; le courant des vapeurs éléminé de la colonne de détente se trouve à une température comprise entre 100 et 135°C, l'eau liquide de l'étape (c) est introduite dans la colonne de détente à une température comprise entre 25 et 80°C, et l'eau usée et l'eau récupérée sont éliminées des première et seconde chambres à une température comprise entre 100 et 135°C.

5. Procédé selon l'une quelconque des revendications précédentes, caractérisé en ce que une partie de l'eau des secondes chambres de résidus (156) est remise en circuit vers le générateur de gaz (15).

6. Procédé selon l'une quelconque des revendications précédentes, caractérisé en ce que le courant condensé est refroidi des vapeurs de l'étape (c) est introduit dans une zone séparée (171) de séparation gaz-liquide où se produit la séparation.

7. Procédé selon l'une quelconque des revendications 3 à 5, caractérisé en ce que le courant refroidi et condensé des vapeurs de l'étape (c) est séparé en composants liquides individuels dans le réservoir de séparation liquide-liquide (116).

8. Procédé selon l'une quelconque des revendications 3 à 7, caractérisé en ce que l'un des composés liquides individuels produit dans le réservoir de séparation (116) est une émulsion qui est cassée par son mélange avec la dispersion d'eau et de carbone et/ou avec l'agent d'extraction organique liquide et introduite dans le décanteur (61) ou par son introduction dans la colonne de détente (149) en mélange au courant d'eau en provenance du décanteur et vaproisée dans cette colonne.

9. Procédé selon l'une quelconque des revendications 3 à 7, caractérisé en ce que l'un des composés liquides individuels produits dans le réservoir de séparation (116) est une couche d'émulsion qui est chauffée pour casser l'émulsion, et séparer alors en eau, en mélange d'hydrocarbures liquides et en impuretées gazeuses, l'eau étant transformée en vapeur dans la colonne de détente (149) et le mélange d'hydrocarbure liquide étant distillé dans la colonne de distillation (137) ou remis dans le circuit du générateur de gaz (15) sous forme d'une partie du combustible à base d'hydrocarbures.

10. Colonne de détente caractérisé en ce qu'elle comprend une colonne verticale (149) comprenant un déversoir vertical (157) s'étendant verticalement à partir de son fond et séparant la partie inférieure de la colonne en une première chambre (158) et en une seconde chambre (156), au moins un plateau de rectification (148) horizontal à l'intérieur de la colonne au-dessus du déversoir, le plateau ou chaque plateau yant des dispositifs de dispersion (150, 151) pour disperser la vapeur dans l'eau retenue sur le plateau, des moyens de débordement et d'écoulement (153, 154) pour éliminer l'eau du plateau ou de plateau en plateau puis dans la seconde chambre, sous le niveau de l'eau de la seconde chambre, des premiers moyens d'entrée pour la détente d'au moins un courant d'eau contenant des particules de matières solides dans l'espace situé sous le plateau de rectification de fond et au-dessus de ce déversoir, des seconds moyens d'entrée pour introduire au moins une vapeur d'eau pratiquement exempte de matières solides dans l'espace situé au-dessus d'au moins un plateau de rectification, des premiers moyens de sortie pour éliminer l'eau de la première chambre, des seconds moyens de sortie pour éliminer l'eau de la seconde chambre, et des troisièmes moyens d'évacuation des vapeurs évacuées, en tête de ladite colonne.

## Patentansprüche

1. Verfahren zum Erzeugen von Gasgemischen, die $H_2$ und CO enthalten oder daraus bestehen, durch Partialoxidation eines kohlenwasserstoffhaltigen Brennstoffs mit einem freien Sauerstoff enthaltenden Gas in einem nichtkatalytischen Gasgenerator (15) bei einer Temperatur von 705 bis 1650°C und einem Druck im Bereich von 98 bis 24520 kPa, Kühlen des resultierenden Gasstroms und. Kontaktieren des Gasstroms mit Wasser, wodurch Feststoffe abgetrennt und ein Reingasstrom sowie eine Kohlenstoff-Wasser-Dispersion, die etwaige Asche enthält, erzeugt werden, Mischen eines flüssigen organischen Extraktionsmittels mit dieser Kohlenstoff-Wasser-Dispersion, und Schwerkrafttrennen in einem Dekantierapparat (61) einer Dispersion aus flüssigem Extraktionsmittel und Kohlenstoffteilchen, wobei diese Dispersion gasförmige Verunreinigungen enthält, und eines verdünnten Wasserstroms, der Kohlenstoff, Asche und gasförmige Verunreinigungen enthält, gekennzeichnet durch

(a) Einleiten des verdünnten Wasserstroms aus dem Dekantierapparat (61) bei reduziertem Druck in eine vertikale Flashkolonne (149) mit einem von deren Boden aufwärts verlaufenden vertikalen Überlauf (157), der den unteren Teil der Kolonne in eine erste Kammer (158) und eine zweite Kammer (156) teilt, mit mindestens einer horizontalen Abstreifplatte (148) innerhalb der Kolonne oberhalb des Überlaufs, wobei die oder jede Platte eine Dispersions-vorrichtung (150, 151) zum Dispergieren von Wasserdampf durch auf der Platte gehaltenes Wasser aufweist, mit Überlauf und Ablauf (153, 154) zum Ableiten von Wasser von der Platte oder von einer Platte zur anderen und dann in die zweite Kammer unter dem Wasserspiegel in der zweiten Kammer, mit erstem Einlaß, der in den Raum unterhalb der unteren Abstreifplatte und oberhalb des Überlaufs führt, mit zweitem Einlaß, der in den Raum über mindestens einer Abstreifplatte führt, mit erstem Auslaß, der aus der ersten Kammer herausführt, mit zweitem Auslaß, der aus der zweiten Kammer herausführt, und mit drittem Auslaß, der aus dem oberen Teil der Kolonne herausführt, wobei der verdünnte Wasserstrom durch den ersten Einlaß eingeleitet wird unter Verdampfen eines Teils des Wasserstroms und die Dämpfe aufwärts durch die Dispersionsvorrichtung in jeder Abstreifplatte und durch das auf jeder Platte enthaltene Wasser geführt werden unter Abstreifen von Gasen aus dem Wasser auf jeder Platte und der unverdampfte Teil des Wasserstroms in die erste Bodenkammer eingeleitet wird;

(b) Abziehen eines Dampfstroms, der $H_2O$, Kohlenwasserstoffe und mindestens eine der folgenden Komponenten $H_2S$, $NH_3$, $CO_2$, enthält, aus der Flashkolonne durch den dritten Auslaß;

(c) Kühlen des Dampfstroms, Kondensieren und Abtrennen von flüssigem Wasser und flüssigem Kohlenwasserstoff von den nichtkondensierten Gasen und Einleiten mindestens eines Teils des Wassers durch den zweiten Einlaß auf eine Abstreifplatte in der Flashkolonne;

(d) Abziehen von Feststoffe enthaltendem Abwasser aus der ersten Bodenkammer durch den ersten Auslaß und Abführen desselben aus dem System; und

(e) Abziehen von rückgewonnenem Wasser aus der zweiten Bodenkammer durch den zweiten Auslaß und Rückführen mindestens eines Teils desselben im Kreislauf in das Gasreinigungsverfahren.

2. Verfahren nach Anspruch 1, dadurch gekennzeichnet, daß Abblaswasser aus einem Gaskühler in die Flashkolonne (149) unterhalb deren unterer Abstreifplatte entspannungsverdampft wird.

3. Verfahren nach Anspruch 1 oder 2, dadurch gekennzeichnet, daß die aus flüssigem Extraktionsmittel und Kohlenstoffteilchen bestehende Dispersion aus dem Dekantierapparat (61) entweder unmittelbar dem Generator (15) als mindestens ein Teil des kohlenwasserstoffhaltigen Brennstoffs zugeführt wird oder daß diese Dispersion mit einem schweren Flüssigkohlenwasserstoff vermischt und das resultierende Gemisch in der Kolonne (137) destilliert wird unter Bildung einer Dispersion aus schwerem Flüssigkohlenwasserstoff und Kohlenstoffteilchen, die dem Generator (15) als mindestens ein Teil des kohlenwasserstoffhaltigen Brennstoffs zugeführt wird, sowie eines Überkopf-Dampfstroms umfassend Extraktionsmittel, Wasserdampf und die genannten gasförmigen Verunreinigungen, und daß der Überkopf-Dampfstrom kondensiert und das resultierende Kondensat in Abtrennbehälter (116) getrennt wird in flüssiges Extraktionsmittel und flüssiges Wasser, das in die Flashkolonne (149) oberhalb einer Abstreifplatte als mindestens ein Teil des verdünnten Wasserstroms injiziert wird.

4. Verfahren nach Anspruch 3, dadurch gekennzeichnet, daß das im Abtrennbehälter (116) getrennte Wasser mit einer Temperatur im Bereich von 25—65°C auf die Abstreifplatte geleitet wird, daß der Wasserstrom aus dem Dekantierapparat (61) mit einer Temperatur von 80—260°C und einem Druck von 1130—6990 kPa durch eine Druckreduziereinheit geschickt und auf einen Druck von 96,5—303 kPa reduziert wird, bevor er in die Flashkolonne (149) unterhalb der genannten Abstreifplatte eingeleitet wird, wodurch ein Teil des Wassers verdampft, und daß der Druck in der Flashkolonne unterhalb jeder Abstreifplatte um 7—21 kPa höher als der Druck in der Kolonne oberhalb der Abstreifplatte ist; daß der aus der Flashkolonne abgezogene Dampfstrom eine Temperatur von 100—135°C hat, das flüssige Wasser von Schritt (c) in die Flashkolonne mit einer Temperatur von 25—80°C eingeleitet wird und Abwasser und rückgewonnenes Wasser aus der ersten und der zweiten Kammer mit einer Temperatur von 100—135°C abgezogen wird.

5. Verfahren nach einem der vorhergehenden Ansprüche, dadurch gekennzeichnet, daß ein Teil des Wassers aus der zweiten Bodenkammer (156) im Kreislauf zum Gasgenerator (15) rückgeführt wird.

6. Verfahren nach einem der vorhergehenden Ansprüche, dadurch gekennzeichnet, daß der abgekühlte und kondensierte Strom von Dämpfen in Schritt (c) in eine gesonderte Gas-Flüssigkeits-Trennzone (171) eingeleitet wird, in der eine Abtrennung erfolgt.

7. Verfahren nach einem der Ansprüche 3—5, dadurch gekennzeichnet, daß der abgekühlte und kondensierte Strom von Dämpfen in Schritt (c) in dem Flüssig-Flüssig-Abtrennbehälter (116) in einzelne Flüssigkeitskomponenten getrennt wird.

8. Verfahren nach einem der Ansprüche 3—7, dadurch gekennzeichnet, daß eine der im Abtrennbehälter (116) gebildeten einzelnen Flüssigkeitskomponenten eine Emulsion ist, die durch Vermischen mit der Kohlenstoff-Wasser-Dispersion und/oder flüssigem organischem Extraktionsmittel gebrochen und in den Dekantierapparat (61) eingeleitet wird oder durch Einleiten in die Flashkolonne (149) in Beimischung mit dem Wasserstrom aus dem Dekantierapparat gebrochen und in der Kolonne verdampft wird.

9. Verfahren nach einem der Ansprüche 3—7, dadurch gekennzeichnet, daß eine der im Abtrennbehälter (116) gebildeten einzelnen Flüssigkeitskomponenten eine Emulsionsschicht ist, die erwärmt wird, um die Emulsion zu brechen, und die dann in Wasser, flüssiges Kohlenwasserstoffgemisch und gasförmige Verunreinigungen getrennt wird, wobei das Wasser in der Flashkolonne (149) verdampft wird und das flüssige Kohlenwasserstoffgemisch in der Destillationskolonne (137) destilliert oder als ein Teil des kohlenwasserstoffhaltigen Brennstoffs im Kreislauf zum Gasgenerator (15) rückgeführt wird.

10. Flashkolonne, dadurch gekennzeichnet, daß sie aufweist: eine vertikale Kolonne (149) mit einem von deren Boden aufwärts verlaufenden vertikalen Überlauf (157), der den unteren Teil der Kolonne in eine erste Kammer (158) und eine zweite Kammer (156) teilt, mindestens eine horizontale Abstreifplatte (148) innerhalb der Kolonne oberhalb des Überlaufs, wobei die oder jede Platte eine Dispersionsvorrichtung (150, 151) zum Dispergieren von Wasserdampf durch auf der Platte gehaltenes Wasser aufweist, Überlauf und Ablauf (153, 154) zum Ableiten von Wasser von der Platte oder von Platte zu Platte und dann in die zweite Kammer unter dem Wasserspiegel in der zweiten Kammer einen ersten Einlaß zum Entspannungsverdampfen mindestens eines Feststoffteilchen enthaltenden Wasserstroms in den Raum unterhalb der unteren Abstreifplatte und oberhalb des Überlaufs, einen zweiten Einlaß zur Injektion mindestens eines im wesentlichen feststofffreien Wasserstroms in den Raum oberhalb mindestens einer Abstreifplatte, einen ersten Auslaß zur Entnahme von Wasser aus der ersten Kammer, einen zweiten Auslaß zur Entnahme von Wasser aus der zweiten Kammer und einen dritten Auslaß zur Überkopfentnahme von Dämpfen aus der Kolonne.

Fig.1

Fig.2